# EUROPEAN PATENT APPLICATION

(11) **EP 1 333 249 A1**
(43) Date of publication of application: **06.08.2003**
(21) Application number: 02002579.7
(22) Date of filing: 04.02.2002
(51) Int. Cl.: G01C 21/36

(54) **Method and system for vehicle navigation**

(71) Applicant: SIEMENS AKTIENGESELLSCHAFT, 80333 München (DE)
(72) Inventor: Giessl, Oliver, 94315 Straubing (DE); Roderer, Goetz, 93051 Regensburg (DE)

(57) **Abstract**

A route navigation system effects route navigating (24) from a first location along an optimized route to a destination location. Such comprises ascertaining the first location (30), storing guidance data (26) derived from the route navigating (24) from the first location along the optimized route, and presenting navigational instructions (36) derived from the guidance data (26) as based on an actual location (32) to a user person. In particular, the said method has the guidance data primarily based on name referring to directive road signs and the presenting is effected under control of state transitions (28,52) of the navigating along the optimized route.

## Description

A route navigation method for storing and presenting guidance data from a first location to a destination location along an optimized route, a navigation system arranged for effecting such method, and a motor vehicle provided with such navigation system.

The invention relates to a navigation method for operating a route navigation system for effecting route navigating from a first location along an optimized route to a destination location, said method comprising ascertaining said first location, storing guidance data derived from said route navigating from said first location along said optimized route, and presenting navigational instructions derived from said guidance data as based on an actual location to a user person.

Present navigation systems have primarily found introduction on board of motor vehicles, although also other applications have been reported. Generally, such system comprises a mechanism for finding an actual location, such as through GPS, a local or remote data bank for on the basis thereon effecting dynamic route determination, a software driven processing facility for dynamic route calculation, a visual display featuring a map image and/or directional indications to the user, and an acoustic system for presenting user information.

The state of the art will necessitate an extensive outlay in hardware and software facilities, in particular because of the meticulous manner wherein the actual step-by-step guidance is effected. The actual instructions to the user generally reside on the lowest possible level, and are in a dynamic manner based only on the in-vehicle information. The present inventors have recognized that the amount of necessary data, the level of processing complexity, the scope of the user interface, and the complex overall realization should be made simpler. The inventors have furthermore recognized that such could be brought about by effectively mimicking the behaviour of a co-driver of the vehicle in question. Such co-driver person would quite often only refer to the existing road signs and other scripted or imaged road signalizations, whilst furthermore keeping the overall guidance on a static level, and outputting the information primarily in the form of speech. Such procedure would in fact detract the driver's attention much less than the necessity for repeatedly consulting a visual screen that most often cannot measure more than few inches across.

In consequence, amongst other things, it is an object of the present invention to generally simplify the state of the art's principles to those formulated along the line of thought presented in the preceding paragraph.

Now therefore, according to one of its aspects the invention is characterized in that said guidance data are primarily based on referring to directive road signs and said presenting is effected under control of state transitions of said navigating along said optimized route. The presentation that mimicks the behaviour of a co-driver represents a technical system by emulating such co-driver for on the basis of machine behaviour realizing a guidance mechanism for a motor vehicle or for a person. The generating of such guidance indications proceeds on the basis of a transition-driven state machine, and the algorithmical formulation of a machine behaviour is generically adapted to human activity steps for realizing the intended purposes, provide for a straightforward, automatic, and resource-efficient system that attains all set targets through using a minimal and well-based set of resources. In combination, the recognition that in most cases a limited accuracy of the route guidance would already be sufficient to effect all or nearly all advantages that standard human procedures would require, forms a solid basis for the non-obviousness and/or inventive stepping of the present inventive concept.

The invention also relates to navigation system arranged for a implementing a navigation method as recited in Claim 1, and a motor vehicle comprising a system arranged for implementing a navigation method as recited in Claim 1.

Such a system may preferably be characterized in that said transitions are triggered through crossing of a closed curve around a predetermined waypoint S(m).

According to an advantageous aspect of the invention said closed curve may be generally circular.

Alternatively, a system according to the invention is being characterized in that said guidance data are kept substantially static under control of said transitions, regardless of a set of variations with respect to said optimized route.

According to another advantageous aspect of the invention such a system is characterized in that it is arranged for mimicking a co-driver.

Another alternative system according to the invention is being characterized in that it is arranged for under control of a deviation from said optimized route redirecting said navigation to said optimized route and provided with a blocking facility against reoptimizing of said guidance data.

A further preferred embodiment of system according to the invention is being characterized by overrule means for under control of a user input signalization overruling said blocking facility for then effectively causing reoptimizing of said guidance data.

Yet another alternative system according to the invention is being characterized in that said referrals include name referrals comprising names of streets, roads, and further route elements.

According to other advantageous aspects of the invention said system is being characterized in that it is essentially based on speech output, in that it is portable, in that it is arranged for upon leaving the vehicle setting an actual position thereof as a find-back location and/or in that it comprises selection means for selecting among a predetermined set of local destinations when leaving the vehicle.

These and further aspects and advantages of the invention will be discussed more in detail hereinafter with reference to the disclosure of preferred embodiments, and in particular with reference to the appended Figures that show:
- Figure 1,: an overall set-up embodiment according to the present invention;
- Figure 2,: a first realization of such embodiment;
- Figure 3,: a second realization of such embodiment;
- Figure 4,: a third realization of such embodiment;
- Figure 5,: a fourth realization of such embodiment;
- Figure 6,: a flow chart of the operation of such embodiment;
- Figure 7,: further aspects of the invention;
- Figure 8,: further aspects of the invention;
- Figure 9,: further aspects of the invention;
- Figure 10,: further aspects of the invention.

Whereas the prior art has a dynamic step-by-step guidance procedure, the present invention will replace it with a more intuitive guidance that is based on a simple and event-based state machine as the controlling entity. In fact, this machine to a large degree mimicks the behaviour of a co-driver, and will upon the occurrence of pre-specified events present the user with appropriate information. Regarding the route finding, this allows the driver to solely concentrate on indication shields that are present along the route, next to the actual traffic itself and the many dynamics thereof. This is advantageously attained in that the route is represented by a chain of interval points, that are each expressed in an associated set of coordinates, from the starting point S(0), up to the final destination point S(n). Next to the coordinates, the interval point data contain all roads connecting to the point in question, and which roads are listed according to a sequence from S(1) to S(m), etcetera. Furthermore, algorithmically each interval point gets a set of concentric "destination circles", which are each divided into a plurality, such as 8 or 12, segments. In principle, a different number of circles may be used that even need not be concentric. The traversal of these sectors allows to stepwise changing of the state of the state machine, as will be discussed more in detail hereinafter. In particular, messages to the user person or driver include references to directive road signs, such as those featuring names of cities or towns, names of roads, intersections and similar points, and other non-named road signs, such as those that lead-off part of the traffic, etcetera.

Various advantages of the system are as follows:
1. The route can be described through using only a small amount of data, and such description is static, which allows to come out with little memory and processing facilities.
2. The routeplanning need not be effected locally on-board, but may in the ideal case be effected by the prospective driver at home on a Personal Computer or the like.
3. In case of off-board routeplanning, the on-board hardware outlay need only be minimal. Even in case of on-board routeplanning, the necessary hardware is greatly diminished with respect to prior art, because no dynamic routefinding is necessary. In fact, a new route calculation will only be effected upon a user request. Absent such route calculating, the processor may be used effectively for other tasks.
4. Software development cost and risk, as well as hardware facilities are largely diminished. Note in particular, that the software for the routeplanning has been uncoupled from the software for the guidance.
5. The user interface mimicks the behaviour of a co-driver and will therefore not need expensive map displays and the like. Nevertheless, the invention allows perfect knowledge to the driver of the next destination, and of the road to be taken there. The system mimicks the behavior of a co-driver and therefore meets the experience of the user. The general usage of speech indications will not require the user to take his eyes from the road.
6. The invention allows the use of simple and cost-effective terminals, inter alia, because map display is no longer essential.
7. It is even possible to realize more simple implementations of the present invention in the form of personal guides that are portable.
8. Because only a quite limited amount of data need be stored, escape routes may be provided automatically.
9. Because only limited amounts of data need be stored, additional data like descriptions, points-of-interest, and the like may be included, and on the basis thereon additional service can be provided to the user.
10. An E-commerce service with additional and visible advantages to the customer may be provided. In principle, presently existent routeplanner facilities are able to generate the information necessary therefor.
11. In the neighbourhood of the eventual destination of the itinerary, the user may on demand get a logical and map-less direction indication (instead of a physical direction), such as through giving a street name plus a logical indication like "to the right after 100 metres".

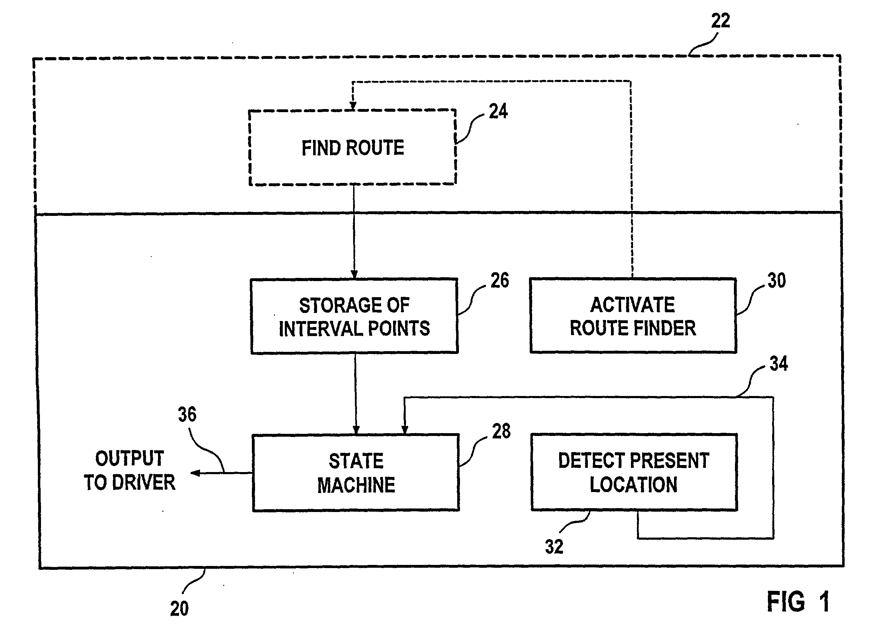

Figure 1 illustrates an overall set-up embodiment according to the present invention. The motor vehicle has succinctly been indicated by rectangle 20. The route finding proper is done in facility 22, that contains the route finding mechanism 24 proper, and furthermore such program and data storage as required. Facility 22 may, or may not form part of the vehicle in question, as has been suggested by the interrupted line drawing thereof. If not, a centralized facility and appropriate telecom facilities should be provided. If the arrangement of Figure 1 should be portable, facility 22 for the route finding should generally be always remote. The route so found translates into a sequence of interval points that are transferred to and stored in facility 26. Under detection of the present location of the vehicle in facility 32, a pertinent signal is sent on line 34 to state machine 28, to control loading therein of an appropriate state from storage facility 26. The state of the state machine controls outputting of an appropriate signalization to the vehicle driver. Finally, facility 30 may be activated at some time, either by the user person, or by some other consideration or signal, to find the route, or rather, a new route to allow for escape from an unsolved situation.

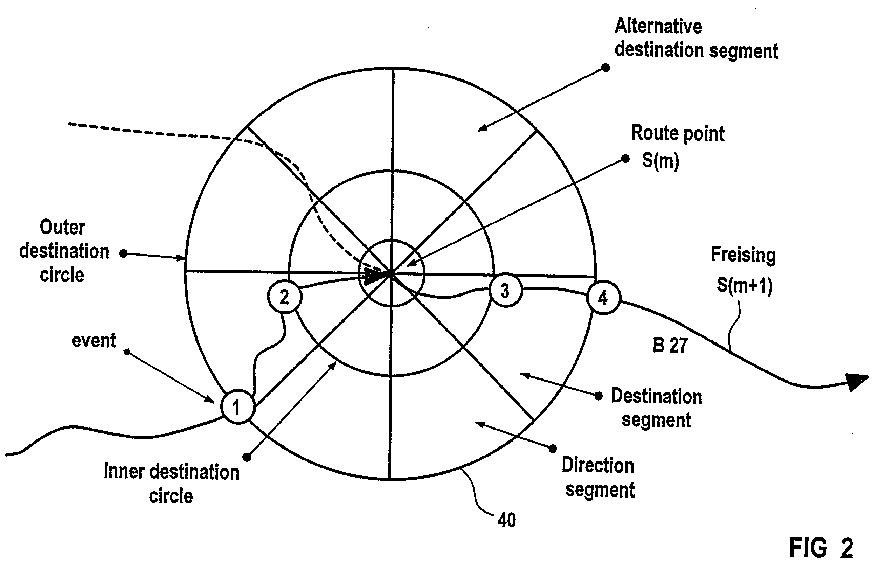

Figure 2 illustrates, by way of summary, a first exemplary realization of the present invention. The region of interest is bounded by outer destination circle 40, which is entered at point "1" lower left hand side, thereby realizing an "event". At point "2", the inner destination circle is entered, which again represents an event, whereas the optimized route B27 leading in the direction of a particular village named FREISING (S(n+1)), leaves those circles again at points "3" and "4" respectively, causing two further events to occur. Going from the center of the circles at Route Point S(n), there is another, alternative, destination segment at the top right rof the Figure, leading to a different, non-optimized path. In the example, the Circle has been divided into eight direction segments. Now, the state machine will react to an event, which reaction can lead to amending appropriate parameters, such as the next Route point S(m+1), and/or may cause an outputting of information to the user person. The state machine associates the proper reaction to the event in question. The size of the two circles may be adapted to be non-uniform over the set of route points S(m).

Finally, the content of the state machine has been shown in the Figure. The state has been given as two values that in the example have a value of either 1 or 2. Furthermore, a specific "status" has been given that in the example is always "idle".

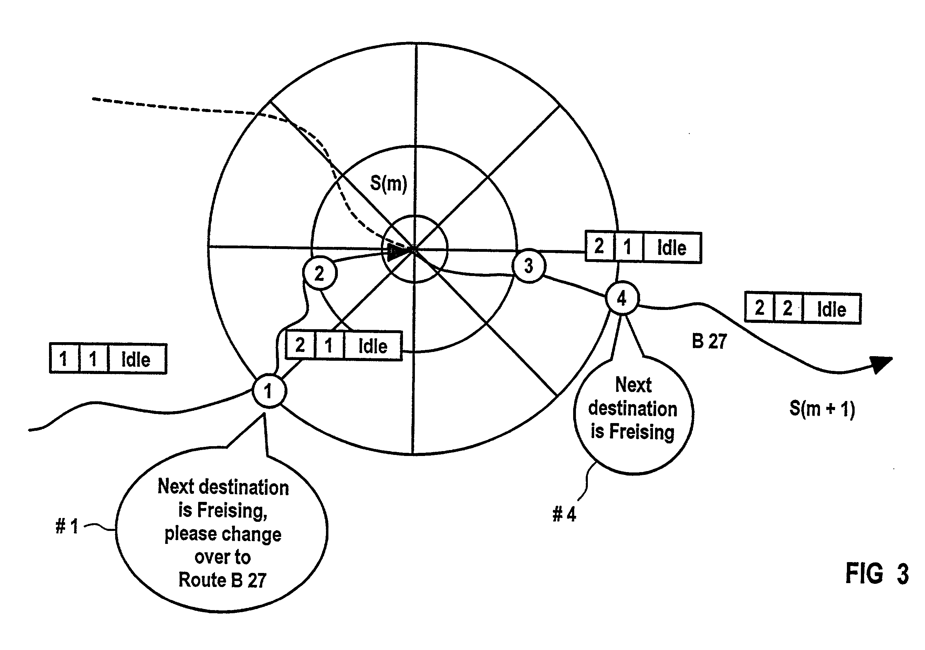

Figure 3 illustrates a second exemplary realization on the basis of the same circle of direction segments, and in particular, for the case of a succesful guidance operation. In particular, the content of the state machine has been indicated for the successive intervals between two consecutive events, coded as follows:
#1: Indication of the next (intermediate) destination;
#2: Indication of the distance to next direction indicator shield;
#3: Check current segment;
#4: Check/Acknowledge.

Furthermore, at points/events #1 and #4, the associated speech outputs have been shown in balloons, as follows:
#1: The next destination is Freising, Please change over to Route B27;
#4: Your next destination will be Freising.

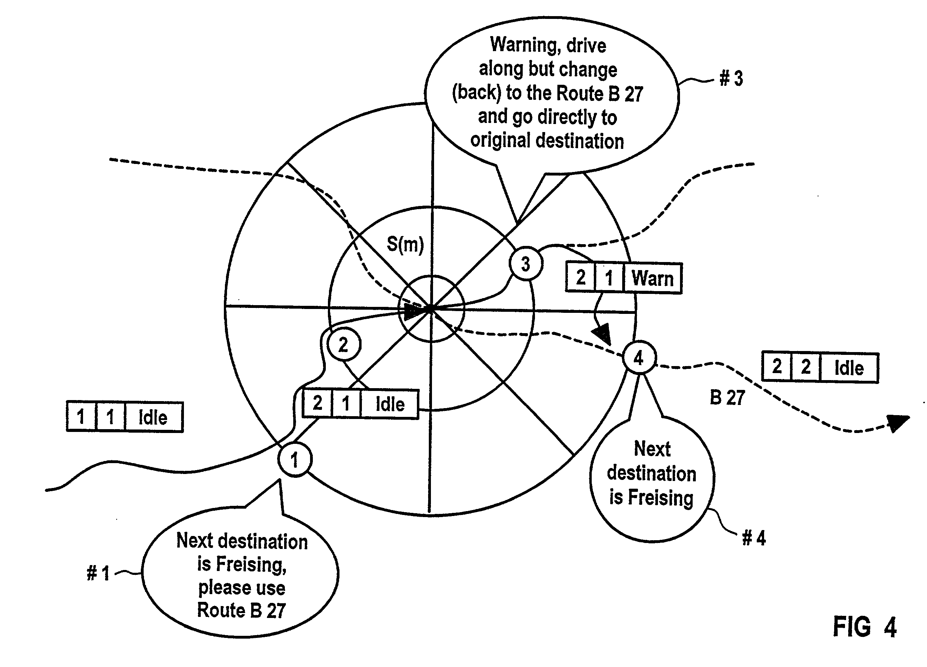

Figure 4 illustrates a third exemplary realization, and in particular, a case when the user happens to follow a deviation route with respect to the optimized route of Figures 2,3. In particular, in the central point of the Figure, the user person has erroneously taken a route in the directional segment that is directed nearly towards the right. The system will correlate the erroneous segment to an erroneous direction. In a few cases this latter conclusion will not be the right one, if either the erroneous road lies in the same segment as the correct road, or otherwise, if a correct substitution road happens to lie in another segment. Anyway, the detection will change the state of the state machine at instant #3, and here the following warning message will be given: "Warning, drive along but change (back) to the route B27 and thereupon go further directly towards the original destination". Otherwise, no changes with respect to Figure 3 are present. In particular, no recalculation of the optimum route will be necessary. In most cases, the procedure so followed will either result in an optimum result, or in a result that is only slightly less good than optimum.

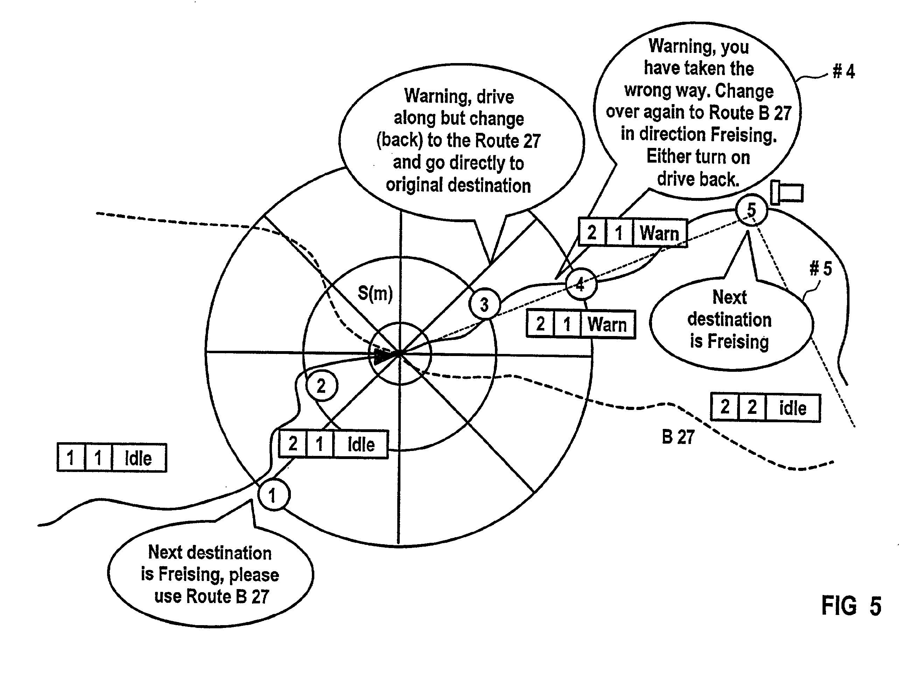

Figure 5 illustrates a fourth exemplary realization, and in particular, a situation where the user person takes again an erroneous route. This lets the same warning message ensue as in the preceding Figure when passing point #3, but now, at crossing the outer circle around point S(m), the user has apparently not undertaken any remedial action. At this point, a further warning message issues: "Warning: you have taken the wrong way. Changeover again to the route B27 in direction Freising. Either turn or drive back". At further point #5 a next event occurs. This event may be caused by various different situations, such as:
- the attaining of a certain distance criterion, such as based on the distance between the destination (S(m)) and the actual position, or as based on the distance between the actual position and the next destination (S(m+1)).
- a third or possibly further crossing of the outer circle.
- a motor stop, such as in this case has been indicated by a restaurant whereto the user person has purposely branched off.
- an express user action, such as indicated by "don't know anymore".
- a criterion based on the time lapsed after the second warning, without the user person having reappeared on the optimized route.

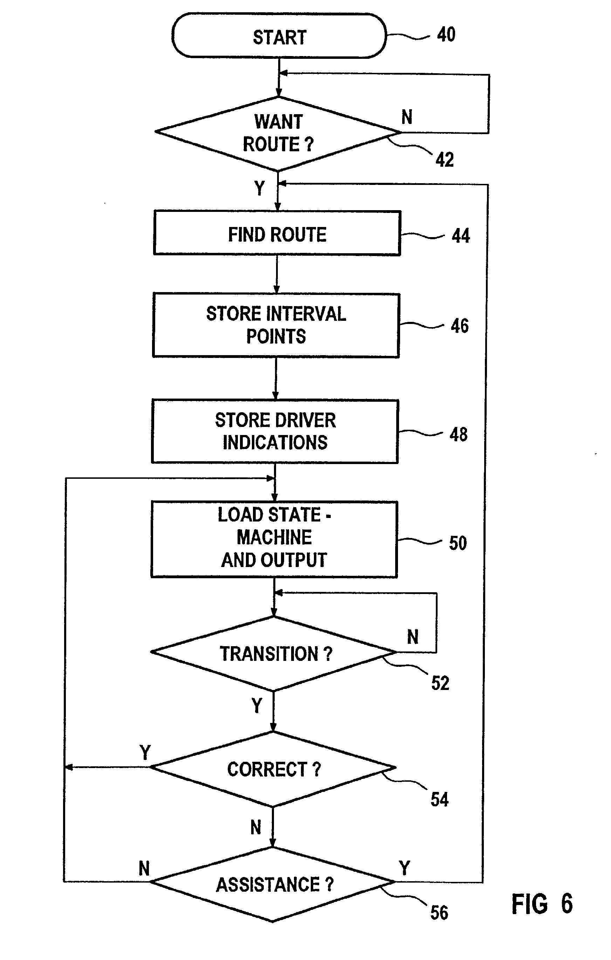

Figure 6 illustrates a flow chart of the embodiment's operation. The procedure begins in block 40, where the necessary hardware and software facilities are claimed. In this simple flow chart, no distinction has been made between on-board processing and remote processing. In the latter case, blocks 42, 44 are executed on a remote platform. In block 42, the system waits for a route finding request from a user. If none, the block operates as a waiting loop. If a request is received, a dialog may follow to get all necessary parameters, such as starting point and destination, and further data, such as time-of-travel, type of vehicle, and further driver preferences, but generally, such procedure may be executed according to the state of the art.

In block 44, the actual route is calculated, and mapped on a set of interval points. These interval points belong to a finite and prespecified set that has been derived from the overall route map data, and each interval point has been provided with the kind of indications disclosed with respect to Figures 2 to 5. Actual starting point locations and destination locations are generally mapped on the interval point that is closest thereto. Moreover, with respect to the various routes passing ***through*** the interval point in question, such starting/destination locations are then associated with more specific indications. For example, if the destination is somewhat to the ***east*** of an interval point, and the ***arrival*** route comes from the ***south,*** the local indication is "turn ***right*** at the <here, the interval point is indicated by its ***character*** viz à viz the arrival route, such as representing a crossing>.

In block 46, the string of interval points belonging to the route is stored in the vehicle processing facility. In block 48, for each interval point, the associated indications for the driver are stored, either in the form of plain speech, or as codes that will be converted into speech locally. In block 50, the actually determined location of the vehicle controls the loading of the associated interval point and its driver indications, and the latter are then presented in the form of speech. In block 52 the system checks for occurrence of any transition as disclosed with respect to Figures 2-5. If no, this block operates as a waiting loop. If yes, the system in block 54 detects whether the driver has correctly followed the most recent indication(s). If yes, the next state is loaded from the storage in block 50, and the associated output is presented to the driver. If no in block 54, the system in block 56 detects whether the driver asks for assistance. If no, the next state is loaded, that subsequently presents a request to the driver to amend the course presently followed, in order to return to the correct route. This is the static case. If in block 56 the driver calls for assistance, the system reverts to block 44 for recalculating the route. This "yes" output from block 56 is to some extent blocked, such as being allowable only under rather uncommon circumstances, such as those disclosed with reference to Figure 5. Various other thresholding policies are feasible in this respect, such as waiting for a second request, and the like.

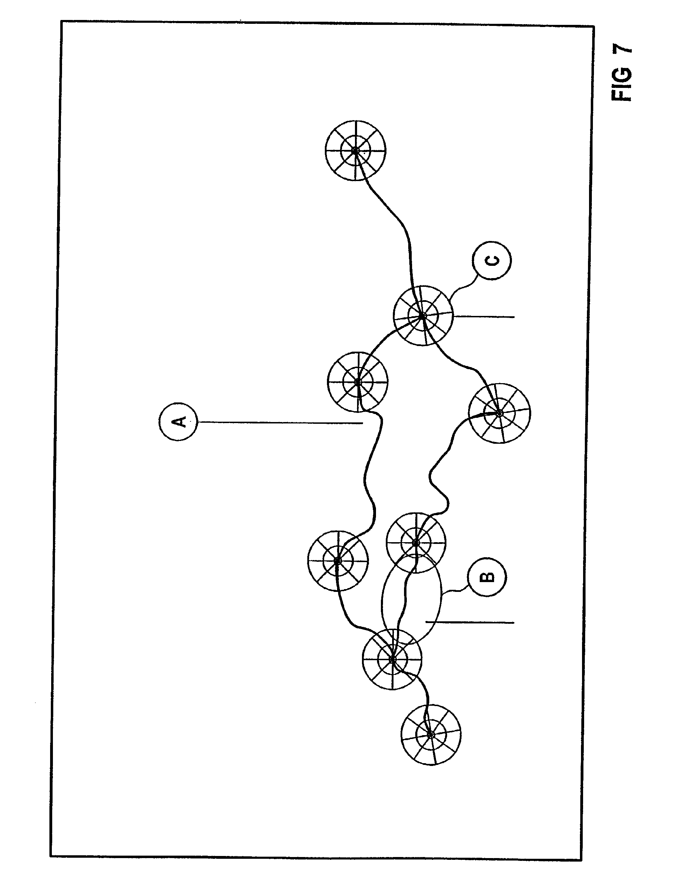

Figure 7 illustrates further aspects of the invention, in this case the presenting of an alternative route **(A).** The example is going from Regensburg to downtown Stuttgart, both in Germany, through accounting for some twenty interval points. In the figure, some eight interval points have been shown that collectively represent two alternatives that are feasible for the route in question. The two alternatives or "escape routes" have been automatically derived during route generating, such as on the basis of Bundesautobahnen (interstate highways). By itself, such ***double*** selecting is state of the art. It is feasible as well to have the alternative route selected manually by the driver. A further extension is to select the route on the basis of two or more destinations, such as according to the famous "travelling salesman problem". Alternatively, the selection among various possible routes may be done manually. At indication (**B**), a whole interval between interval points is being checked. First, in case of a deviation from the calculated route (such as in case of a pause), the whole interval is surveyed. Secondly, in case of a deviation, followed by a renewed approach to the "correct" route, the driver is alerted in this latter respect. Third, in case of large deviations, one or more extra intervals may need to be retrieved from the data base, even if recalculating of the whole route is not undertaken. At indication **(C),** the route just goes on through the interval point. This may be accompanied by the system acknowledging or notifying of this correct travelling.

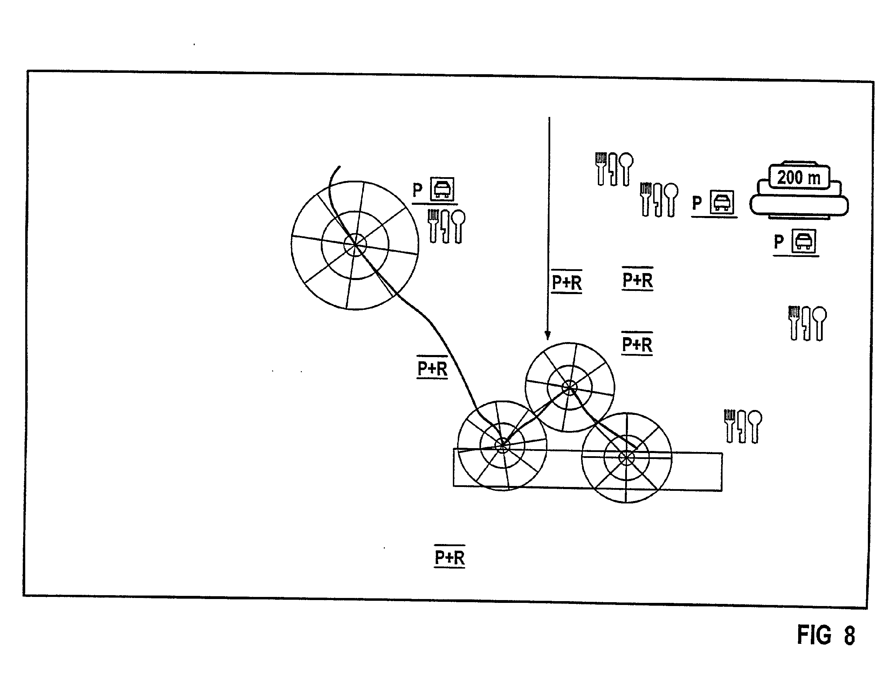

Figure 8 illustrates further aspects of the invention. As shown, the various interval point circles have respective different diameters, and may even have (not shown) different shapes, such as half circles in case the interval point in question lies on the edge of a sea or lake. The adapting of the size may furthermore derive from the following:
- the number of interval points in a particular area, inasmuch as circles should in general not overlap each other;
- the distance between various neighbouring interval points, such as, for example, successive internal points along a particular road; here the same arguments apply as in the preceding case;
- the type of road, so that interstate highways (Bundesautobahnen) may have larger circles, whereas city streets would have smaller circles;
- actual or standard speed for the area in question, or rather, more frequent changes of the driving direction. Again, at a higher speed, the circles should be larger. In a mountainous region, the circles should be relatively smaller.

The circles may be standardized to a few different sizes, such as four, regarding Interstate Highways, National or State Highways (Bundesstrasse), Inner City streets, and points of interests, respectively. The diameters could for example be one mile, half a mile, a quarter mile, and 100 metres, respectively, for these four cases. The Figure shows the relevance of taking smaller circles in an inner city, as compared to a suburb. Furthermore, the diameter of a particular may be adapted to the character of the message that may need to be given for the associated change of state. In case of an extended message, the output time thereof, and correspondingly, the diameter of the circle, could be taken greater.

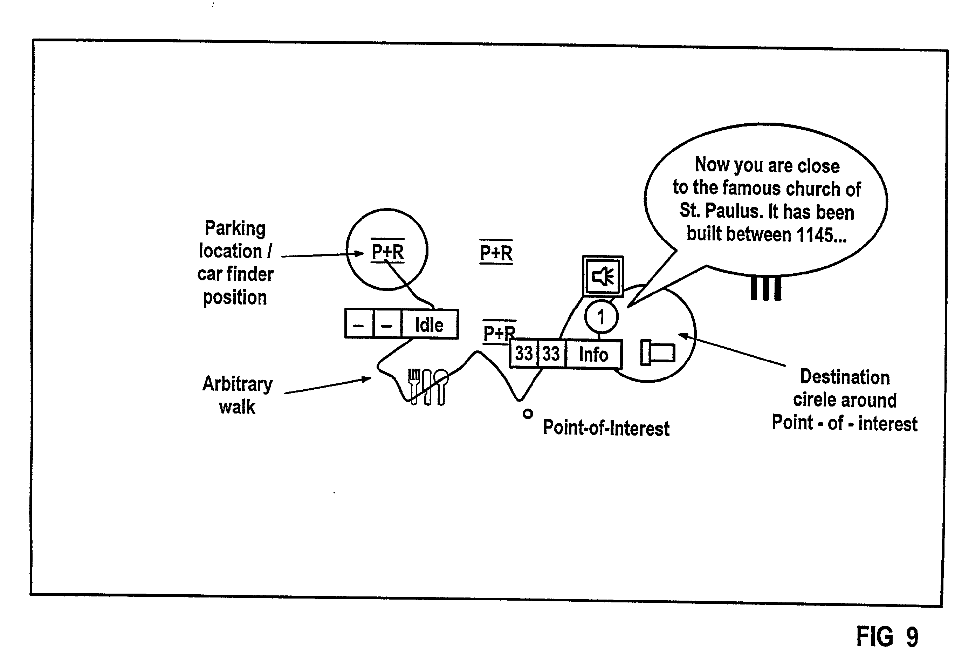

Figure 9 illustrates further aspects of the invention. Here, the diagram includes various useful functions. First, "P+R" indicates a parking location where the driver could leave the vehicle, whilst taking a portable navigation subsystem therefrom for allowing to find back the parking location, in the portable subsystem had stored the actual position when leaving the vehicle. As shown, the status during an arbitrary walk is " - , - , Idle ". Next, upon nearing a particular point-of-interest such as a famous church, the status will change into " 33 , 33 , Info ", and the system will output information regarding this church as shown in the Figure. The circle around this point-of-interest has also been shown. In this way, the portable apparatus can operate as a kind of tourist guide.

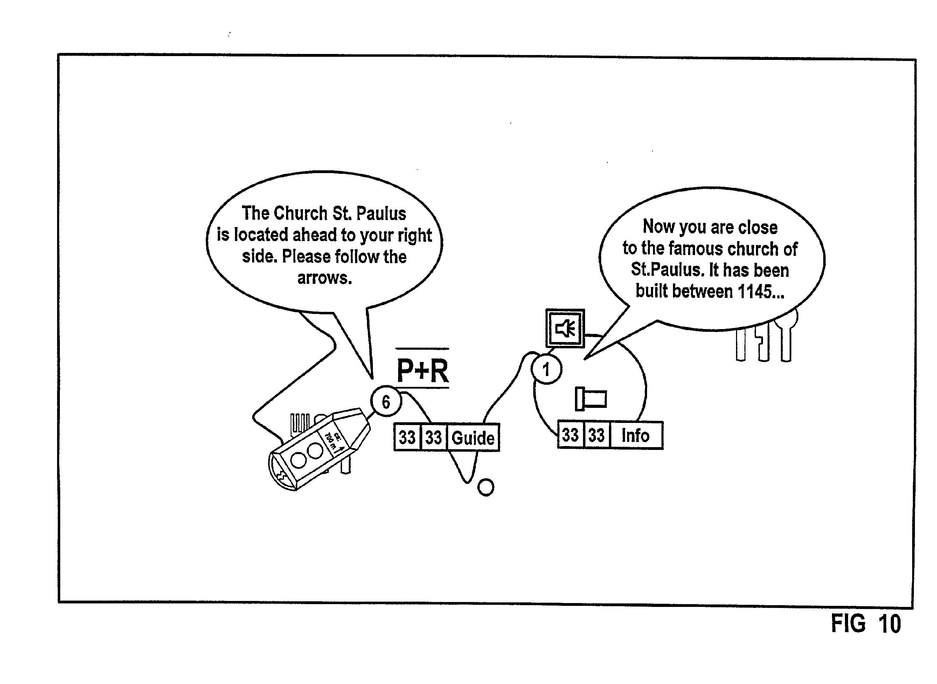

Figure 10 illustrates further aspects of the invention, in particular, as regarding the portable information part. Associated with the navigation system, the user may manually, such as when having arrived at point "6", select a destination, whereupon the guidance will be effected automatically. The selection may be based on a menu that features a list, such as "town hall", "cathedral", "view point", "guided tour", etcetera. At point "1", the hand-held apparatus will then produce a text as shown. The set of selectable destinations may be loaded at the instant of actually leaving the vehicle.
Now, the invention has been described hereabove with reference to preferred embodiments that should be considered as examples, rather than as being restrictive. The rightful scope of the present invention should therefore be determined according to the appended Claims.

## Claims

1. A method for operating a route navigation system for effecting route navigating (24) from a first location along an optimized route to a destination location, said method comprising ascertaining said first location (30), storing guidance data (26) derived from said route navigating (24) from said first location along said optimized route, and presenting navigational instructions (36) derived from said guidance data (26) as based on an actual location (32) to a user person,
said method being **characterized in that** said guidance data are primarily based on referring to directive road signs and said presenting is effected under control of state transitions (28, 52) of said navigating along said optimized route.

2. A navigation system being arranged for effecting a route navigation procedure (24) from a first location along an optimized route to a destination location according to the method as claimed in Claim 1, said system comprising ascertaining means for ascertaining said first location (32), data storage means for storing guidance data (26) derived from said route navigation from said actual location along said optimized route, and presentation means (36) for presenting navigational instructions derived from said guidance data (26) as based on an actual location to a user person,
said system being **characterized in that** said guidance data are primarily based on referrals to directive road signs and said presentation means are triggerred under control of state transitions (28, 52) of said navigation along said optimized route.

3. A system as claimed in Claim 2, being **characterized in that** said transitions are triggered through crossing of a closed curve (40) around a predetermined waypoint S(m).

4. A system as claimed in Claim 3, being **characterized in that** said closed curve (40) is generally circular.

5. A system as claimed in Claim 2, being **characterized in that** said guidance data are kept substantially static (50) under control of said transitions, regardless of a set of variations with respect to said optimized route.

6. A system as claimed in Claim 2, being **characterized in that** it is arranged for mimicking a co-driver.

7. A system as claimed in Claim 2, and being **characterized in that** it is arranged for under control of a deviation from said optimized route redirecting said navigation to said optimized route and provided with a blocking facility against reoptimizing of said guidance data.

8. A system as claimed in Claim 7, being **characterized by** overrule means (56) for under control of a user input signalization overruling said blocking facility for then effectively causing reoptimizing of said guidance data.

9. A system as claimed in Claim 2, being **characterized in that** said referrals include name referrals comprising names of streets, roads, and further route elements.

10. A system as claimed in Claim 2, being **characterized in that** it is essentially based on speech output.

11. A system as claimed in Claim 2, being **characterized in that** it is portable.

12. A system as claimed in Claim 11, being **characterized in that** it is arranged for upon leaving the vehicle setting an actual position thereof as a find-back location (Figure 9).

13. A system as claimed in Claim 11, being **characterized by** selection means for selecting among a predetermined set of local destinations when leaving the vehicle.

14. A motor vehicle being **characterized by** a navigation system as claimed in Claim 2, which is interfaced to said navigation system.
